# EUROPEAN PATENT APPLICATION

(11) **EP 4 235 958 A1**
(43) Date of publication of application: **30.08.2023**
(21) Application number: 21886847.9
(22) Date of filing: 28.10.2021
(51) Int. Cl.: H01Q 1/24, H04M 1/02, H01Q 1/38

(54) **ELECTRONIC DEVICE COMPRISING METALLIC MEMBER AND ANTENNA**

(30) Priority: 28.10.2020 KR 20200141374
(71) Applicant: Samsung Electronics Co., Ltd., Suwon-si, Gyeonggi-do 16677 (KR)
(72) Inventor: PARK, Sungkoo, Suwon-si Gyeonggi-do 16677 (KR); HWANG, Soonho, Suwon-si Gyeonggi-do 16677 (KR); AN, Chankyu, Suwon-si Gyeonggi-do 16677 (KR); OH, Dongjun, Suwon-si Gyeonggi-do 16677 (KR); YUN, Himchan, Suwon-si Gyeonggi-do 16677 (KR); LEE, Kookjoo, Suwon-si Gyeonggi-do 16677 (KR); CHOI, Nakchung, Suwon-si Gyeonggi-do 16677 (KR)
(74) Representative: HGF
(86) International application number: PCT/KR2021/015307
(87) International publication number: WO 2022/092853

(57) **Abstract**

An electronic device according to various embodiments of the present disclosure comprises a first housing, a second housing, a flexible display, a metal frame, a non-metallic member, a metallic member disposed along the edge of the flexible display on the non-metallic member, a printed circuit board including a ground region, and a wireless communication circuit, wherein the metal frame includes a first antenna element defined by means of a first insulating member and a second insulating member, and a second antenna element defined by means of the first insulating member and a third insulating member, and the metallic member is connected to the ground region at positions corresponding to the first insulating member and the second insulating member, and the metallic member can be connected to the ground region through a switch at a position corresponding to the third insulating member. Other various embodiments are possible.

## Description

### [Technical Field]

Embodiments disclosed herein relate to an electronic device including a metallic member and an antenna.

### [Background Art]

In a bar-type electronic device, a protective member such as glass may be disposed on the front surface of a display to protect the display, and a member such as a waterproof tape may be disposed in an empty space between the glass and a side surface member included in the housing.

Meanwhile, in the case of a foldable electronic device or a slidable (or rollable) electronic device including a flexible display, a window layer such as a bendable film may be attached to the front surface of the display. In addition, in the case of a foldable electronic device, an empty space between a window layer attached to the front surface of the display and a side surface member included in the housing may be filled with a metallic member to prevent inflow of foreign substances.

An antenna may be provided by using a portion of a conductive portion of a housing of an electronic device. In addition, an antenna may be configured with a conductive pattern provided inside a frame of an electronic device through a laser direct structuring (LDS) method.

### [Disclosure of Invention]

### [Technical Problem]

In the case of a foldable electronic device, an empty space between a window layer such as a film attached to the front surface of a display and a side surface member may be filled with an additional metallic member in addition to the side surface member to prevent inflow of foreign substances. When the metallic member is floating without being electrically connected to a printed circuit board or a support member including a conductive member, multiple parasitic resonances may occur due to the coupling of currents flowing through the antenna and the metallic member. The parasitic resonances due to coupling may be a factor in deteriorating radiation performance of an antenna.

Meanwhile, when the metallic member is electrically connected to the printed circuit board or the support member to be grounded to a ground region in order to remove parasitic resonances caused by the metallic member, it may be possible to remove the parasitic resonances. However, since the antenna is located electrically close to the ground region, the radiation performance of the antenna may be degraded.

The degradation of antenna performance due to a metal member around the antenna may occur not only in a foldable electronic device but also in a bar-type electronic device including a metal member.

Various embodiments disclosed herein may include a ground application structure that removes parasitic resonances and improves antenna radiation performance by connecting a metallic member to a ground region at a predetermined position in an electronic device including a metallic member.

### [Solution to Problem]

According to various embodiments, an electronic device may include a first housing, a second housing connected to the first housing via a connecting member to be rotatable to the first housing, a flexible display forming a front surface of the electronic device and disposed over the first housing and the second housing, a metal frame forming a portion of a side surface of the electronic device, a non-metallic member forming another portion of the side surface of the electronic device while being in contact with the metal frame, a metallic member disposed along an edge of the flexible display on the non-metallic member, a printed circuit board disposed in an inner space of the electronic device formed by the metal frame, the printed circuit board including a ground region, and a wireless communication circuit disposed in the space formed by the metal frame. The metal frame may include a first antenna element defined by a first insulating member and a second insulating member, and a second antenna element defined by the first insulating member and a third insulating member, the wireless communication circuit may be configured to feed power to the first antenna element and the second antenna element, the metallic member may be connected to the ground region at positions that correspond to the first insulating member and the second insulating member, respectively, and the metallic member may be connected to the ground region via a switch at a position that corresponds to the third insulating member.

According to various embodiments, an electronic device may include a display forming a front surface of the electronic device, a metal frame forming a portion of a side surface of the electronic device, a non-metallic member forming another portion of the side surface of the electronic device while being in contact with the metal frame, a metallic member arranged on the non-metallic member along an edge of the front surface of the electronic device, a printed circuit board disposed in a space formed by the metal frame and including a ground region, and a wireless communication circuit disposed in the space formed by the metal frame. The metal frame may include a first antenna element defined by a first insulating member and a second insulating member, and a second antenna element defined by the first insulating member and a third insulating member, the wireless communication circuit may be configured to feed power to the first antenna element and the second antenna element, the metallic member may be connected to the ground region at positions that correspond to the first insulating member and the second insulating member, respectively, and the metallic member may be connected to the ground region via a switch at a position that corresponds to the third insulating member.

### [Advantageous Effects of Invention]

According to various embodiments disclosed herein, it is possible to remove parasitic resonances by connecting a metallic member included in a foldable electronic device to a printed circuit board or a ground region of a support member.

In addition, according to various embodiments disclosed herein, by connecting a metallic member included in a foldable electronic device to a ground region at a predetermined position and to a ground region at a position different from the predetermined position via a switch, it is possible to selectively improve antenna radiation performance through switching depending on a frequency band in which antenna radiation is executed.

Furthermore, substantially the same effect may be obtained not only in a foldable electronic device but also in other types of electronic devices, such as a slidable-type electronic device including a metallic member or a bar-type electronic device.

In addition, various effects directly or indirectly identified through the disclosure may be provided.

### [Brief Description of Drawings]

FIG. 1 is a plan view of an electronic device according to various embodiments.
FIG. 2 is a view illustrating a first antenna element and a second antenna element of an electronic device according to an embodiment.
FIG. 3 is a side view of an electronic device including a metallic member according to an embodiment.
FIG. 4 is a view illustrating a metallic member including a first ground portion according to an embodiment.
FIGS. 5 illustrate S-parameter graphs depending on whether a first ground portion is provided in a metallic member according to an embodiment.
FIG. 6 illustrates a metallic member including a first ground portion and a second ground portion according to an embodiment.
FIG. 7 illustrates S11 graphs of a second antenna element depending on whether or not a first ground portion and a second ground portion are provided in a metallic member according to an embodiment.
FIG. 8 illustrates a metallic member having a first ground portion, a second ground portion, and a third ground portion according to an embodiment.
FIGS. 9 illustrate S11 graphs of a first antenna element and a second antenna element depending on whether or not a first ground portion, a second ground portion, and a third ground portion are provided in a metallic member according to an embodiment.
FIG. 10 illustrates a hardware configuration of a switch connected to a third ground portion according to an embodiment.
FIG. 11 illustrates a metallic member having a fourth ground portion, a fifth ground portion, and a sixth ground portion according to an embodiment.
FIGS. 12 illustrate S-parameter graphs depending on whether a fourth ground portion is provided in a metallic member according to an embodiment.
FIG. 13 illustrates a first housing and a second housing, in which, when the first housing and the second housing face each other, the second housing includes ground portions at positions that correspond to a first ground portion, a second ground portion, and a third ground portion, respectively.
FIGS. 14 illustrate S11 graphs depending on whether or not a seventh ground portion, an eighth ground portion, and a ninth ground portion according to an embodiment are provided.
FIG. 15 illustrates electronic devices which include antenna radiators provided in different ways and a metallic member according to an embodiment.
FIG. 16 illustrates a first antenna radiator and a second antenna radiator in an electronic device according to an embodiment.
FIG. 17A is a front perspective view of an electronic device according to an embodiment in a first state.
FIG. 17B is a front perspective view of the electronic device according to an embodiment in a second state.
FIG. 17C is a rear perspective view of the electronic device according to an embodiment in the first state.
FIG. 17D is a rear perspective view of the electronic device according to an embodiment in the second state.
FIG. 18 is a block diagram of an electronic device according to various embodiments in a network environment.

### [Best Mode for Carrying out the Invention]

Hereinafter, various embodiments of the disclosure will be described with reference to the accompanying drawings. However, it shall be understood that it is not intended to limit the disclosure to specific embodiments, and that the disclosure includes various modifications, equivalents, or alternatives of the embodiments of the disclosure.

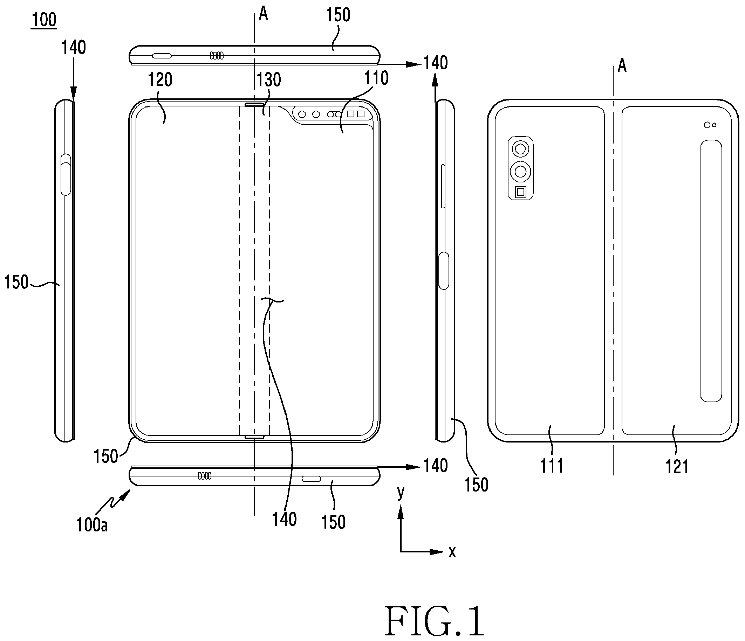

FIG. 1 is a plan view of an electronic device 100 according to various embodiments.

Referring to FIG. 1, the electronic device 100 may include a first housing 110, a second housing 120, a connecting member 130, a flexible display 140, and a side surface member 150. For example, the side surface member 150 may include a conductive material such as a metal frame.

According to an embodiment, the first housing 110 and the second housing 120 may be rotatably connected to each other by the connecting member 130. For example, the connecting member 130 may be a hinge structure including a hinge driver, and an electronic device including the first housing 110 and the second housing 120 rotatably connected to each other by the hinge structure 100 may be a foldable electronic device.

According to an embodiment, the flexible display 140 may define at least a portion of the front surface of the electronic device 100 (e.g., the surface facing the +y direction of the electronic device 100 in 100a of FIG. 1) and may be disposed over the first housing 110 and the second housing 120. In an example, when the first housing 110 and the second housing 120 are rotated by the connecting member 130, at least a portion of the flexible display 140 may be bent.

According to an embodiment, the rear surface of the first housing 110 may be defined by a first rear surface cover 111, and the rear surface of the second housing 120 may be defined by a second rear surface cover 121. In an example, the first rear surface cover 111 and the second rear surface cover 121 may protect the electronic device 100 from an external impact.

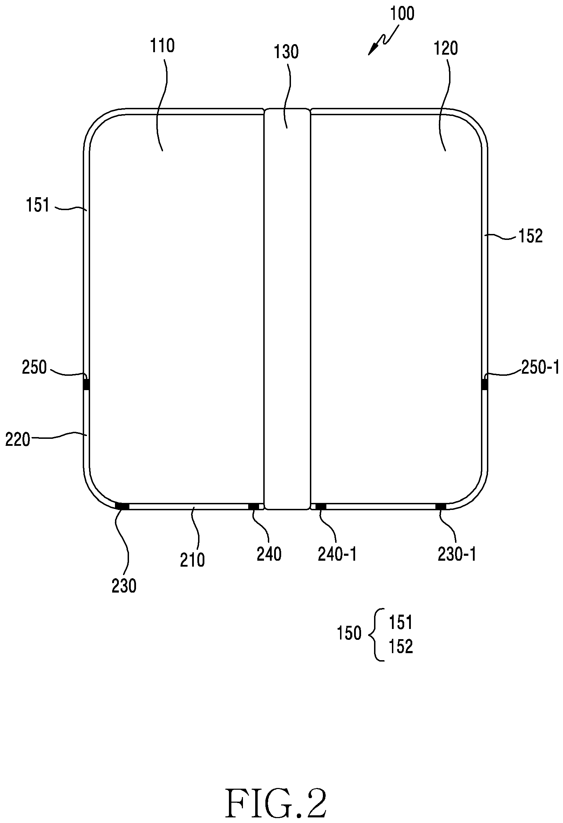

FIG. 2 illustrates a first antenna element 210 and a second antenna element 220 of the electronic device 100 according to an embodiment.

Referring to FIG. 2, the side surface member 150 may include the first antenna element 210 and/or the second antenna element 220. The position where the first antenna element 210 and/or the second antenna element 220 are provided is not limited to a position in the first housing 110 as in the example illustrated in FIG. 2, and the first antenna element 210 and/or the second antenna element 220 may be provided at another position of the first housing 110 or at a position in the second housing 120.

According to an embodiment, at least a portion of a side surface member 150 made of a conductive material may operate as a radiator of an antenna.

The side surface member 150 may include a first side surface member 151 disposed on the first housing 110 and a second side surface member 152 disposed on the second housing 120.

According to an embodiment, the side surface member 150 may include the first antenna element 210, the first insulating member 230, and/or a second insulating member 240 different from the first insulating member 230. The first insulating member 230 may be located at one side of the first antenna element 210, and the second insulating member 240 may be located at the other side of the first antenna element 210. For example, the first antenna element 210 may be provided in one region of the side surface member 150 divided by the first insulating member 230 and the second insulating member 240.

According to an embodiment, the side surface member 150 may include the second antenna element 220, the first insulating member 230, and a third insulating member 250 different from the first insulating member 230. The first insulating member 230 may be located at one side of the second antenna element 220, and the third insulating member 250 may be located at the other side of the second antenna element 220. For example, the second antenna element 220 may be provided in one region of the side surface member 150 divided by the first insulating member 230 and the third insulating member 250.

According to an embodiment, the side surface member 150 provided on the second housing 120 may include insulating members 230-1, 240-1, and 250-1 at positions that correspond to the insulating member 230, the second insulating member 240, and the third insulating member 250, respectively, which are included in the side member 150 provided in the first housing 110 when the electronic device 100 is in the folded state. For example, the side surface member 150 may include insulating members 230-1, 240-1, and 250-1 at least partially overlapping the first insulating member 230, the second insulating member 240, and the third insulating member 250, respectively, when viewed from above the first rear surface cover 111 in a state in which the electronic device is folded.

According to an embodiment, the first insulating member 230, the second insulating member 240, the third insulating member 250, and/or the insulating members 230-1, 240-1, and 250-1 may be made of a material having a predetermined permittivity. For example, the first insulating member 230, the second insulating member 240, the third insulating member 250, and/or the insulating members 230-1, 240-1, and 250-1 may be made of an insulating material such as silicon oxide (SiO₂), silicon carbon nitride (SiCN), and/or silicon nitride (Si₃N₄).

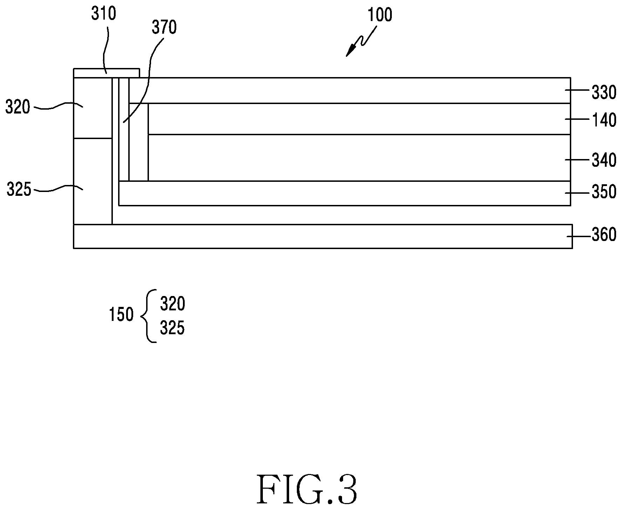

FIG. 3 is a side view of an electronic device 100 including a metallic member 310 according to an embodiment.

Referring to FIG. 3, the electronic device 100 may include a metallic member 310 as a component different from the side surface member 150.

According to an embodiment, the electronic device 100 may include a side surface member 150 or a metallic member 310. In an example, the side surface member 150 may include a conductive member (e.g., the first antenna element 210 or the second antenna element 220 of FIG. 2) or a non-metallic member 320. For example, the non-metallic member 320 may define a portion of the side surface of the electronic device 100.

According to an embodiment, the side surface member 150 may include a metal frame 325 and a non-metal member 320. For example, at least a portion of the side surface member 150 may include a metal frame 325 made of a conductive material, and at least another portion of the side surface member 150 may include a non-metallic member 320 separated from the metal frame 325 and made of a non-conductive material.

According to an embodiment, the metallic member 310 may be disposed along an edge of the flexible display 140 while being located on the non-metallic member 320. For example, the metallic member 310 may be located at the front side of the electronic device 100 (e.g., the +y direction which is viewed by the front surface of the electronic device 100 in 100a of FIG. 1) on the non-metallic member 320 while being in contact with the non-metallic member 320 and may be disposed along an edge of the flexible display 140.

According to an embodiment, in order to protect the flexible display 140 from an external impact, a window layer 300 may be placed on the front surface of the flexible display 140 (e.g., the surface facing the +y direction of the electronic device 100 in 100a of FIG. 1). For example, the window layer 330 may include a flexible film. According to an embodiment, the window layer 330 may include a polymer layer (e.g., polyethylene terephthalate (PET)) or a glass layer (e.g., ultra-thin glass (UTG)). For example, the glass layer may be laminated with the polymer layer. According to an embodiment, the polymer layer may include PET or polyimide. According to an embodiment, the glass layer may include ultra-thin glass (UTG).

According to an embodiment, the metallic member 310 may fill the space between the non-metallic member 320 and the window layer 330 to block foreign substances from flowing into the electronic device 100 from the outside.

According to an embodiment, a wireless communication circuit (not illustrated) and a support member 340 may be disposed on a printed circuit board 350 included in the inner space of the electronic device 100 defined by the side surface member 150. The support member 340 may support the printed circuit board 350 or the flexible display 140. The support member 340 may include, for example, a conductive material.

According to an embodiment, the metallic member 310 may be electrically connected to the printed circuit board 350 or the support member 340. For example, the metallic member 310 may be electrically connected to the support member 340 via the printed circuit board 350. In an example, the metallic member 310 may be electrically connected to the printed circuit board 350 via the conductive connecting member 370. For example, the conductive connecting member 370 may include a C-clip, a pogo-pin, or a conductive line.

In an embodiment, a rear surface cover 360 (e.g., the first rear surface cover 111 of FIG. 1) may be disposed on the rear surface of the electronic device 100 (e.g., the surface located at the -y direction in the electronic device 100 in 100a of FIG. 1). In an example, the rear surface cover 360 disposed on the rear surface of the electronic device 100 may be made of glass. As another example, the rear surface cover 360 may be fabricated integrally with the side surface member 150 or may be fabricated separately from the side surface member 150 and coupled to the side surface member 150.

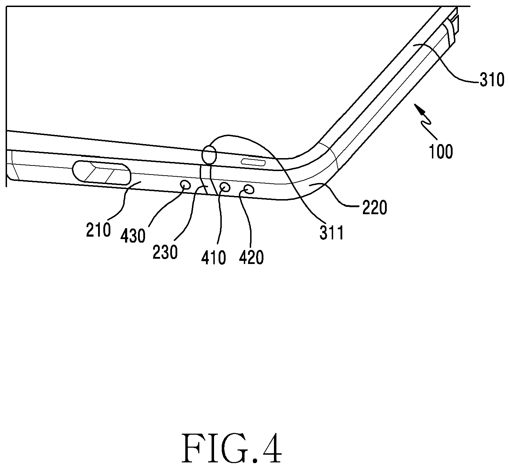

FIG. 4 illustrates a metallic member 310 having a first ground portion 311 according to an embodiment.

Referring to FIG. 4, the first ground portion 311 may be provided in one region of the metallic member 310 of the electronic device 100.

According to an embodiment, the first ground portion 311 may be provided at a position of the metallic member 310 spaced apart by a predetermined distance from the first insulating member 230 provided in one region of the side surface member 150. For example, the first ground portion 311 may be provided at a position adjacent to the first insulating member 230 or at a position corresponding to the first insulating member 230. The first ground portion 311 may be electrically connected to a ground included in the printed circuit board 350 or the support member 340.

According to an embodiment, a first point 410 of the second antenna element 220 may be connected to a ground region. For example, the first point 410 of the second antenna element 220 may be electrically connected to a ground region included in the printed circuit board 350.

According to an embodiment, a second point 420 of the second antenna element 220 may be connected to a second feeding path (not illustrated). For example, the second point 420 of the second antenna element 220 may be electrically connected to the wireless communication circuit via the second feeding path, and the wireless communication circuit may feed power to the second antenna element via the second feeding path. In an embodiment, the first point 410 may be located closer to the first insulating member 230 than the second point 420. The second antenna element 220 may be included in the second antenna.

According to an embodiment, the first antenna element 210 may be connected to a first feeding path (not illustrated) at a third point 430. For example, the third point 430 of the first antenna element 210 may be electrically connected to the wireless communication circuit via the first feeding path, and the wireless communication circuit may feed power to the first antenna element 210 via the first feeding path. The first antenna element 210 may be included in the first antenna.

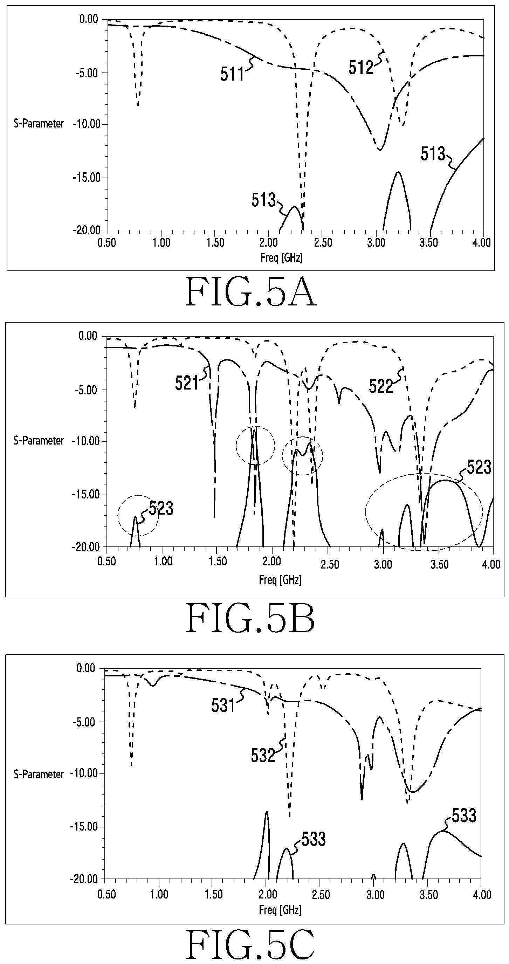

FIG. 5 illustrates S-parameter graphs of the first antenna and the second antenna depending on whether or not the first ground portion 311 of the metallic member 310 according to an embodiment is grounded. For example, the first antenna may include the first antenna element 210. The second antenna may include the second antenna element 220.

Referring to FIG. 5, parasitic resonances may or may not occur depending on whether or not the first ground portion 311 of the metallic member 310 is grounded.

FIG. 5A illustrates S parameter graphs in a case where a dielectric fabricated through injection molding and having a predetermined permittivity is provided instead of the metallic member 310, FIG. 5B illustrates S parameter graphs in a case where the first ground portion 311 is not grounded to the metallic member 310, and FIG. 5C illustrates S-parameter graphs when the first ground portion 311 is grounded to the metallic member 310.

Referring to FIG. 5A, when the electronic device 100 includes a dielectric material, it may be identified that the isolation characteristic between the first antenna including the first antenna element 210 and the second antenna including the second antenna element 220 is about -10 dB or less and that there is almost no interference between the first and second antennas.

Referring to FIG. 5B, when the electronic device 100 includes the metallic member 310, referring to graph S21 523, it may be identified that the isolation characteristic between the first antenna including the first antenna element 210 and the second antenna including the second antenna is degraded, and referring to S11 graph 521 and S22 graph 522, it may be identified that parasitic resonances occurred.

According to an embodiment, comparing S11 graphs 521, 531 and S22 graphs 522, 532 of FIG. 5B and FIG. 5C, when the first ground portion 311 of the metallic member 310 is grounded, parasitic resonances may be removed in multiple frequency bands.

According to an embodiment, when comparing S21 graphs 513, 523, 533 of FIG. 5A, FIG. 5B, and FIG. 5C, when the first ground portion 311 is grounded to the metallic member 310, the influence of interference between the first antenna and the second antenna may be significantly reduced compared to the case where the first ground portion 311 is not grounded to the metallic member 310.

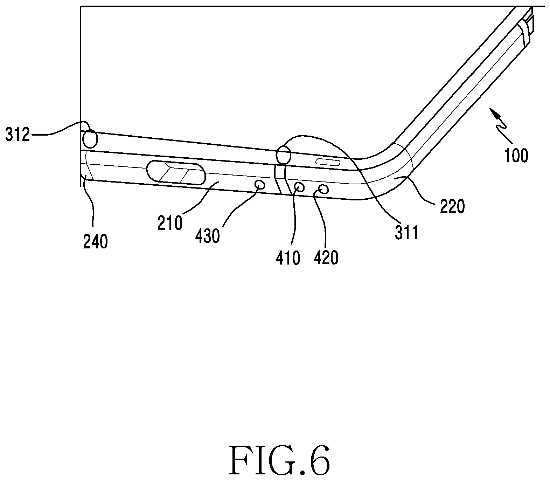

FIG. 6 illustrates a metallic member 310 having a first ground portion 311 and a second ground portion 312 according to an embodiment. As for the components illustrated in FIG. 4 among the components of the electronic device 100 illustrated in FIG. 6, descriptions made with reference to FIG. 4 may be equally applicable to descriptions made with reference to FIG. 6.

Referring to FIG. 6, a first ground portion 311 may be provided in one region of the metallic member 310 of the electronic device 100, and a second ground portion 312 may be provided in another region of the metallic member 310.

According to an embodiment, the second ground portion 312 may be provided at a position of the metallic member 310 spaced apart by a predetermined distance from the second insulating member 240 provided in one region of the side surface member 150. For example, the second ground portion 312 may be provided at a position adj acent to the second insulating member 240 or at a position corresponding to the second insulating member 240. The second ground portion 312 may be electrically connected to a ground included in the printed circuit board 350 or the support member 340.

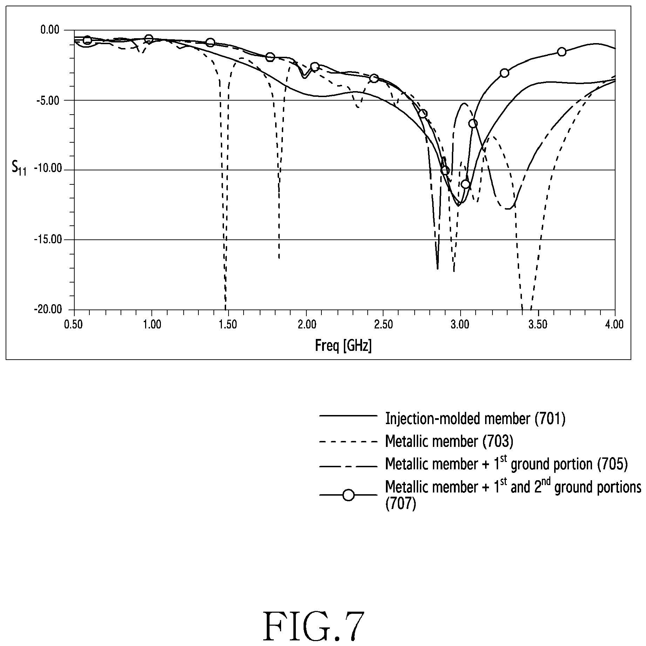

FIG. 7 illustrates S11 graphs of a first antenna including the antenna element 210 fed with power at a third point 430 depending on whether or not the first ground portion 311 and the second ground portion 312 of the metallic member 310 according to an embodiment are grounded. Graph 701 of FIG. 7 illustrates a case where a dielectric material fabricated by injection molding and having a predetermined permittivity is provided instead of the metallic member 310, graph 703 illustrates a case where the first ground portion 311 and the second ground portion 312 of the metallic member 310 are not grounded, graph 705 illustrates a case where the first ground portion 311 of the metallic member 310 is grounded, and graph 707 illustrates a case where the first ground portion 311 and the second ground portion 312 of the metallic member 310 are grounded.

Referring to FIG. 7, in the case where the first ground portion 311 and the second ground portion 312 of the metallic member 310 are not grounded, parasitic resonances may occur in multiple frequency bands compared to the case where a dielectric material fabricated through injection molding and having a predetermined permittivity is provided instead of the metallic member 310. Compared to the case where the metallic member 310 is not grounded, in the case where the first ground portion 311 of the metallic member 310 is grounded or in the case where the first ground portion 311 and the second ground portion 312 of the metallic member 310 are grounded, parasitic resonances may be reduced in multiple frequency bands.

According to an embodiment, compared to the case where the metallic member 310 is not grounded as represented by graph 703, it can be identified that parasitic resonances are reduced when the first ground portion 311 of the metallic member 310 is grounded but in-band parasitic resonances of the first antenna remain as represented by graph 705. As represented by graph 707, it can be identified that when both the first ground portion 311 and the second ground portion 312 of the metallic member 310 are grounded, in-band parasitic resonances of the first antenna are removed. In an example, as represented by graph 707, when the first ground portion 311 and the second ground portion 312 of the metallic member 310 are both grounded, most of the parasitic resonances are removed so that the metallic member 310 can be operated as an antenna radiator resonating in a frequency band of about 3GHz. For example, in the case where the first ground portion 311 of the metallic member 310 is grounded, out of the ends of the first antenna element 210 having the strongest electromagnetic fields, the end closer to the second insulating member 240 is located close to the metallic member 310 to cause coupling of parasitic components and to make physical lengths similar. Thus, parasitic resonances may occur. In this case, when the second ground portion 312 is grounded, the parasitic resonances may be removed. For example, when the first ground portion 311 and the second ground portion 312 are both grounded, the performance of the first antenna may be improved.

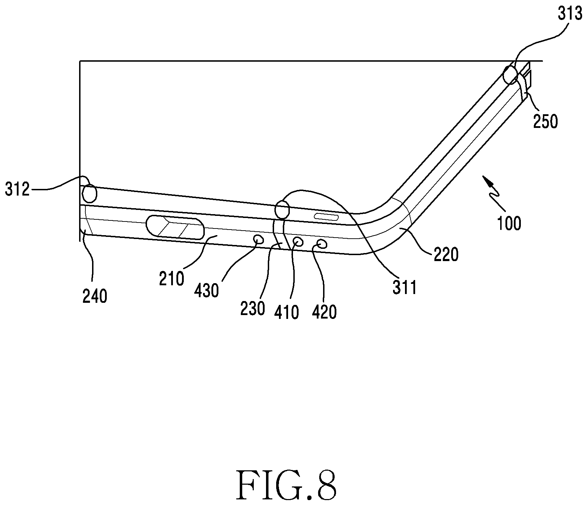

FIG. 8 illustrates a metallic member 310 having a first ground portion 311, a second ground portion 312, and a third ground portion 313 according to an embodiment. As for the components illustrated in FIGS. 4 and 6 among the components of the electronic device 100 illustrated in FIG. 8, descriptions made with reference to FIGS. 4 and 6 may be equally applicable to the descriptions made with reference to FIG. 8.

Referring to FIG. 8, a first ground portion 311 may be provided in one region of the metallic member 310 of the electronic device 100, a second ground portion 312 may be provided in another region of the metallic member 310, and a third ground portion 313 may be provided in still another region of the metallic member 310. For example, the first ground portion 311, the second ground portion 312, or the third ground portion 313 may be electrically connected to a ground included in the printed circuit board 350 or the support member 340.

According to an embodiment, the third ground portion 313 may be provided at a position of the metallic member 310 spaced apart by a predetermined distance from the third insulating member 250 provided in one region of the side surface member 150. For example, the third ground portion 313 may be provided at a position adjacent to the third insulating member 250 or at a position corresponding to the third insulating member 250.

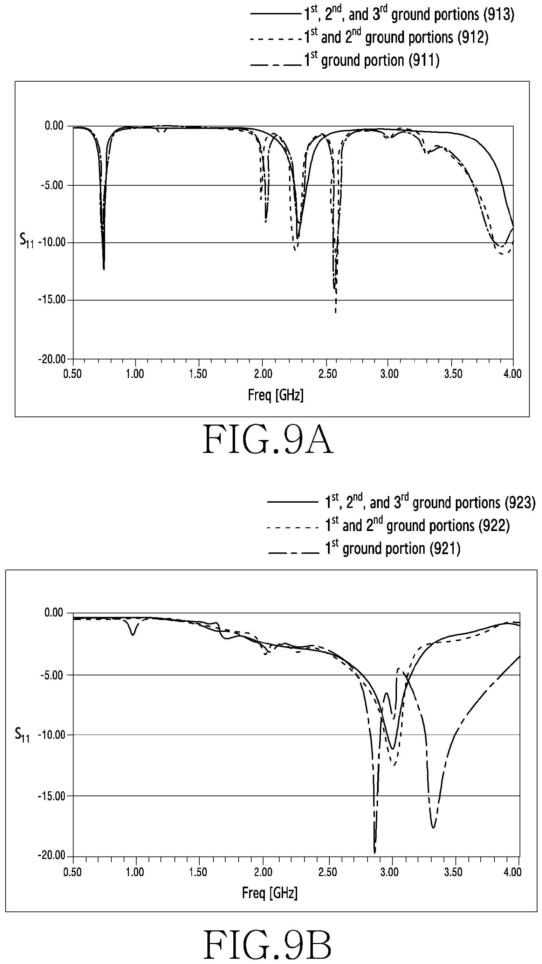

FIG. 9 illustrates S11 graphs of a first antenna including the first antenna element 210 and a second antenna including the second antenna element 220 depending on whether or not the first ground portion 311, the second ground portion 312, and the third ground portion 313 of the metallic member 310 are grounded according to an embodiment. FIG. 9A illustrates S11 graphs of the first antenna including the first antenna element 210 depending on whether or not the first ground portion 311, the second ground portion 312, and the third ground portion 313 of the metallic member 310 are grounded, and FIG. 9B illustrates S 11 graphs of the second antenna including the second antenna element 220 depending on whether or not the first ground portion 311, the second ground portion 312, and the third ground portion 313 of the metallic member 310 are grounded. In FIGS. 9A and 9B, the third ground portion 313 may be understood to be connected to a ground region when the switch is in an ON state.

Referring to FIG. 9, graph 911 and graph 921 represent a case where only the first ground portion 311 is grounded to the metallic member 310, graph 912 and graph 922 represent a case where the first ground portion 311 and the second ground portion 312 in the metallic member 310 are grounded, and graph 913 and graph 923 represent a case where the first ground portion 311, the second ground portion 312, and the third ground portion 313 are grounded to the metallic member 310.

According to an embodiment, when the first ground portion 311, the second ground portion 312, and the third ground portion 313 are all grounded to the metallic member 310 as represented by graph 923, most of the parasitic resonances are removed and the first antenna resonates in a frequency band of about 3 GHz so that the first antenna can be operated as an antenna radiator.

According to an embodiment, when the third ground portion 313 is grounded to the metallic member 310, parasitic resonances may be removed from the resonances formed in the second antenna, and resonances formed in the first antenna may not be affected by the parasitic resonances.

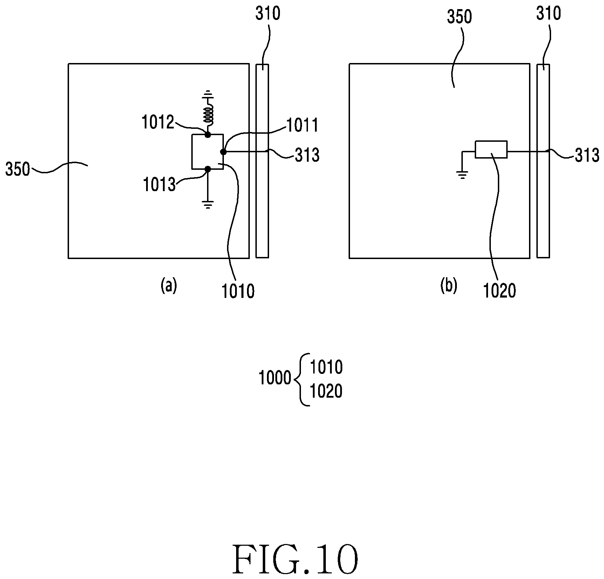

FIG. 10 illustrates hardware configurations of a switch 1000 connected to the third ground portion 313 according to an embodiment.

Referring to FIG. 10, the switch circuit 1000 may correspond to a diplexer 1010 as illustrated in FIG. 10A or a filter 1020 as illustrated in FIG. 10B.

According to an embodiment, the first ground portion 311 may be electrically connected to a first switch circuit (not illustrated), the second ground portion 312 may be electrically connected to a second switch circuit (not illustrated), and/or the third ground portion 313 may be electrically connected to a third switch circuit (not illustrated). For example, the first ground portion 311, the second ground portion 312, or the third ground portion 313 may control first to third switch circuits based on a frequency band of a signal transmitted and/or received by the electronic device 100. For example, the first switch circuit, the second switch circuit, or the third switch circuit may include a switch.

**[Table 1]**

| | 1^{st} frequency band | 2^{nd} frequency band | 3^{rd} frequency band |
|---|---|---|---|
| 1^{st} ground portion | Grounded | Regardless of whether grounded or not | Grounded |
| 2^{nd} ground portion | Regardless of whether grounded or not | Regardless of whether grounded or not | Grounded |
| 3^{rd} ground portion | Not grounded | Grounded | Regardless of whether grounded or not |

According to an embodiment, the antenna including the first antenna element 210 may support a third frequency band (e.g., a high band), and the second antenna including the second antenna element 220 may support a first frequency band (e.g., a low band) and a second frequency band (e.g., a middle band). Referring to Table 1, for example, in order to improve the performance in the first frequency band, the first ground portion 311 may be grounded to a ground by turning ON the first switch circuit connected to the first ground portion, the third ground portion 313 may not be grounded to the ground by turning OFF the third switch circuit connected to the third ground portion 313, and the second ground portion 312 may be grounded to the ground by turning ON or OFF the second switch circuit connected to the second ground portion 312. As another example, in order to improve the performance in the second frequency band, the third ground portion 313 may be grounded to the ground by turning ON or OFF the first switch circuit and by turning ON the third switch circuit. As another example, in order to improve the performance in the third frequency band, the first switch circuit or the second switch circuit may be turned ON, and the third switch circuit may be turned ON or OFF. As a result, when the first switch circuit (not illustrated) and the second switch circuit (not illustrated) according to an embodiment are always shorted to be turned ON, a wireless communication circuit (not illustrated) may control the third switch circuit (not illustrated) in response to a radio-frequency (RF) signal that is being transmitted and/or received. For example, the wireless communication circuit (not illustrated) may short the third switch circuit when transmitting and/or receiving a signal in a first frequency band, and in an example, the third switch circuit may be turned ON. As another example, the wireless communication circuit may open the third switch circuit when transmitting and/or receiving a signal in a second frequency band, and in an example, the third switch circuit may be turned OFF. The second frequency band may mean a frequency band higher than the first frequency band.

According to an embodiment, the third ground portion 313, which is at least a portion of the metallic member 310, may be electrically connected to a ground region provided in the printed circuit board 350 via the switch 1000. In this case, the first ground portion 311 or the second ground portion 312 may be always grounded to a ground or may be selectively grounded by using a switch circuit. For example, the ground region provided in the printed circuit board 350 may be electrically connected to the switch circuit 1000, and the metallic member 310 may be electrically connected to the printed circuit board 350 by being connected to the ground region via the third ground portion 313 connected to the switch circuit 1000 by a conductive wire.

According to an embodiment, the switch circuit 1000 may include a diplexer 1010 or a filter 1020, which is a passive element. In an embodiment, the first frequency band may be a low band (LB), the second frequency band may be a middle band (MB), and the third frequency band may be a high band (HB).

For example, when the diplexer 1010 includes a first terminal 1011, a second terminal 1012, or a third terminal 1013 and when the first terminal 1011 is electrically connected to the third ground portion 313, the second terminal 1012, which is a first frequency band path, is connected to an inductor having an open characteristic, and the third terminal 1013, which is a second frequency band path, is connected to a ground, in terms of RF, a circuit may be configured by using characteristics in which in terms of RF, the first frequency band is open and the third frequency band is shorted.

As another example, the filter 1020 may include a high pass filter (HPF). The filter 1020 may be determined based on a frequency band. The filter 1020 may include a first port and a second port. When the first port is electrically connected to the third ground portion 313 and the second port is connected to the ground, the switch circuit 1000 may be configured by using characteristics in which the first frequency band is open and the third frequency band is shorted.

Referring to FIG. 9 and FIG. 10, depending on whether or not the third ground portion 313 and the ground region are electrically shorted or opened via the diplexer 1010 or the filter 1020, it may be determined whether or not parasitic resonances are removed from resonances formed in the second antenna. In an example, when the third ground portion 313 and the ground region are electrically connected to each other via the diplexer 1010 or the filter 1020, parasitic resonances may be removed from resonances formed in the second antenna including the second antenna element 220.

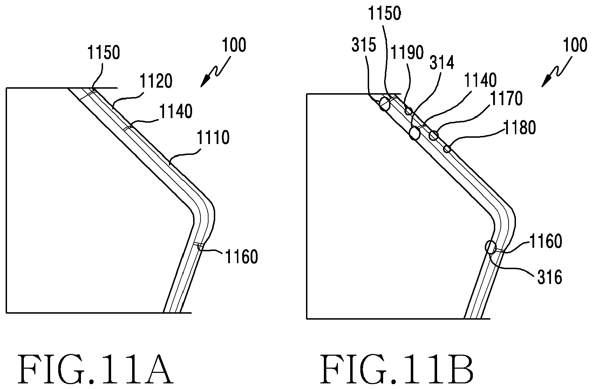

FIGS. 11 illustrates a metallic member 310 having a fourth ground portion 314, a fifth ground portion 315, and a sixth ground portion 316 according to an embodiment.

Referring to FIG. 11, a third antenna element 1110 and/or a fourth antenna element 1120 may be provided in one region of the electronic device 100.

According to an embodiment, the side surface member 150 may include a third antenna element 1110, a fourth insulating member 1140, and/or a sixth insulating member 1160. The fourth insulating member 1140 may be located at one side of the third antenna element 1110, and the sixth insulating member 1160 may be located at the other side of the third antenna element 1110.

According to an embodiment, the side surface member 150 may be defined by a fourth antenna element 1120, a fourth insulating member 1140, and/or a fifth insulating member 1150. The fourth insulating member 1140 may be located at one side of the fourth antenna element 1120, and the fifth insulating member 1150 may be located at the other side of the fourth antenna element 1120.

According to an embodiment, a first point 1170 of the third antenna element 1110 may be electrically connected to a ground region. For example, the second point 1170 may be closer to the fifth insulating member 1150 than the sixth insulating member 1160.

According to an embodiment, a second point 1180 of the third antenna element 1110 may be fed with power via a third feeding path (not illustrated). In an example, the third antenna element 1110 may be fed with power via a feeding path connected to a voltage source or a current source via the second point 1180 thereof. In another example, the third antenna element 1110 may operate as an antenna radiator of the third antenna by being fed with power via the second point 1180 thereof. For example, the second point 1180 may be located between the first point 1170 and the sixth insulating member 1160.

According to an embodiment, a third point 1190 of the fourth antenna element 1120 may be fed with power via a fourth feeding path (not illustrated). In an example, the fourth antenna element 1120 may be fed with power via a feeding path connected to the voltage source or the current source via the third point 1190 thereof. In another example, the fourth antenna element 1120 may operate as an antenna radiator of the fourth antenna by being fed with power via the third point 1190 thereof.

According to an embodiment, a fourth ground portion 314, a fifth ground portion 315, and/or a sixth ground portion 316 may be provided in at least one region of the metallic member 310. In an example, the fourth ground portion 314 may be provided adjacent to the fourth insulating member 1140. In another example, the fifth ground portion 315 may be provided adjacent to the fifth insulating member 1150. In another example, the sixth ground portion 316 may be provided adjacent to the sixth insulating member 1160.

According to an embodiment, the sixth ground portion 316 may be electrically connected to the switch 1000 in substantially the same manner as the third ground portion 313 illustrated in FIG. 10. In an example, the switch 1000 may correspond to the diplexer 1010 illustrated in FIG. 10A or may include a filter 1020 as illustrated in FIG. 10B.

According to an embodiment, the sixth ground portion 316, which is at least a portion of the metallic member 310, may be electrically connected to a ground region provided in the printed circuit board 350 via the switch 1000. For example, the ground region provided in the printed circuit board 350 may be electrically connected to the switch 1000, and the metallic member 310 may be electrically connected to the printed circuit board 350 by being connected to the ground region via the sixth ground portion 316 connected to the switch 1000 by a conductive wire.

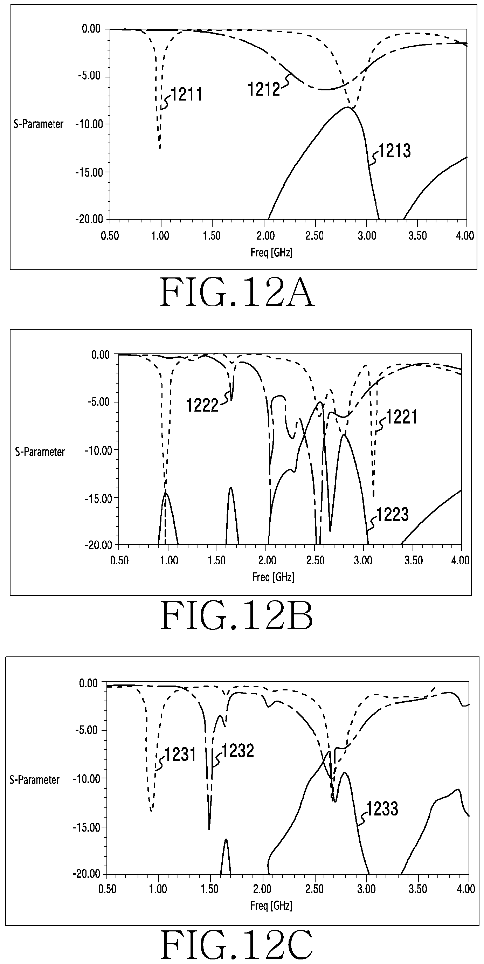

FIG. 12 illustrates S-parameter graphs of the third antenna including the third antenna element 1110 and the fourth antenna including the fourth antenna element 1120 depending on whether or not the fourth ground portion 314 of the metallic member 310 according to an embodiment is grounded. FIG. 12A illustrates S-parameter graphs of the third and fourth antennas in a case where a dielectric material fabricated by injection molding and having a predetermined permittivity is provided instead of the metallic member 310, FIG. 12B illustrates S-parameter graphs of the third and fourth antennas in a case where the fourth ground portion 314 of the metallic member 310 is not grounded, and FIG. 12C illustrates S-parameter graphs of the third and fourth antennas in a case where the fourth ground portion 314 of the metallic member 310 is grounded.

Referring to FIGS. 12, parasitic resonances may or may not occur depending on whether or not the fourth ground portion 314 of the metallic member 310 is grounded.

According to an embodiment, comparing S33 graphs 1221, 1231 and S44 graphs (1222, 1232) of FIG. 12B and FIG. 12C, when the fourth ground portion 314 is grounded to the metallic member 310, parasitic resonances may be removed in multiple frequency bands.

According to an embodiment, when comparing S34 graphs 1213, 1223, 1233 of FIG. 12A, FIG. 12B, and FIG. 12C, when the fourth ground portion 314 of the metallic member 310 is grounded, the influence of interference between the third antenna and the fourth antenna may be significantly reduced compared to the case where the fourth ground portion 314 of the metallic member 310 is not grounded.

According to an embodiment, when the fourth ground portion 314 of the metallic member 310 is grounded, the third antenna element 1110 may operate as an antenna radiator in a low-frequency band or a Wi-Fi band, and the fourth antenna element 1120 may operate as an antenna radiator in a global positioning system (GPS) band, a middle-frequency band, or a high-frequency band. In an example, the low-frequency band may mean a frequency band of 800 MHz among frequency bands less than 1 GHz, and the Wi-Fi band may mean a frequency band of 2.4 GHz. In another example, the GPS band may mean a frequency band of 1.5 GHz, the middle-frequency band may mean a frequency band of 1.8 GHz, and the high-frequency band may mean a frequency band of 2.6 GHz.

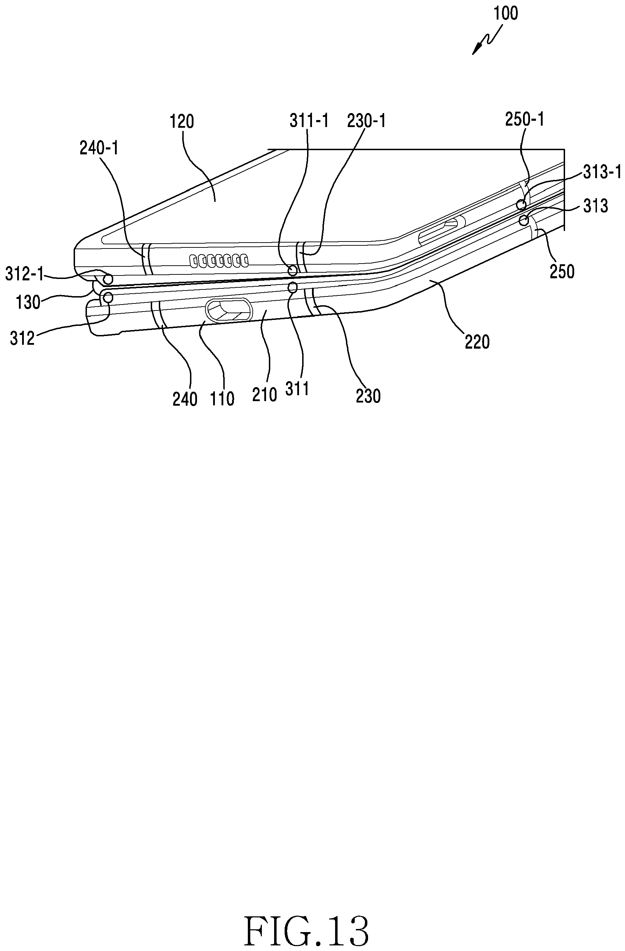

FIG. 13 illustrates an electronic device including a first housing 110 and a second housing 120, in which, when the first housing 110 and the second housing 120 face each other, the second housing 120 includes a seventh ground portion 311-1 at a position corresponding to a first ground portion 311, an eighth ground portion 312-1 at a position corresponding to a second ground portion 312, and/or a ninth ground portion 313-1 at a position corresponding to a third ground portion 313.

Referring to FIG. 13, the first housing 110 may include a first insulating member 230, a second insulating member 240, a third insulating member 250, the first ground portion 311, the second ground portion 312, and/or the third ground portion 313, and the second housing 120 may include a seventh insulating member 230-1, an eighth insulating member 240-1, a ninth insulating member 250-1, the seventh ground portion 311-1, the eighth ground portion 312-1, and/or the ninth ground portion 313-1.

According to an embodiment, when the first housing 110 and the second housing 120 face each other, the seventh insulating member 230-1, the eighth insulating member 240-1, the ninth insulating member 250-1, the seventh ground portion 311-1, the eighth ground portion 312-1, and the ninth ground portion 313-1 may be provided at positions that correspond to the first insulating member 230, the second insulating member 240, the third insulating member 250, the first ground portion 311, the second ground portion 312, and the third ground portion 313, respectively.

According to an embodiment, the configurations of the seventh insulating member 230-1, the eighth insulating member 240-1, the ninth insulating member 250-1, the seventh ground portion 311-1, the eighth ground portion 312-1, and the ninth ground portion 313-1 may be substantially the same as those of the first insulating member 230, the second insulating member 240, the third insulating member 250, the first ground portion 311, the second ground portion 312, and the third ground portion 313, respectively. For example, the seventh insulating member 230-1, the eighth insulating member 240-1, or the ninth insulating member 250-1 may be made of a non-conductive material in one region of the side surface member 150. As another example, the seventh ground portion 311-1, the eighth ground portion 312-1, and the ninth ground portion 313-1 may be provided at positions that are adjacent to or correspond to the seventh insulating member 230-1, the eighth insulating member 240-1, and the ninth insulating member 250-1, respectively. As another example, the ninth ground portion 313-1 may be electrically connected to a ground via a switch circuit 1000 in substantially the same way as the third ground portion 313 illustrated in FIG. 10.

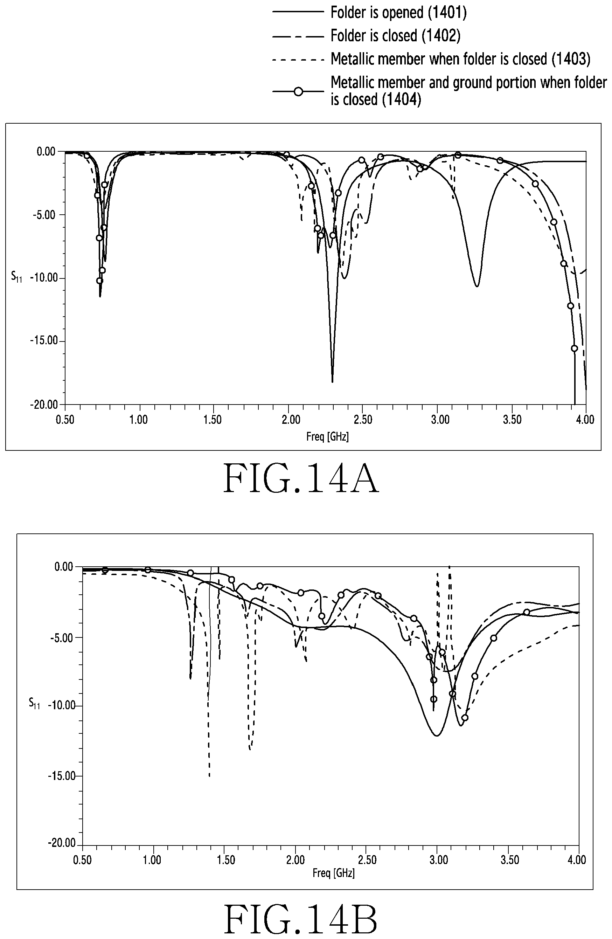

FIGS. 14 illustrates S11 graphs depending on whether or not the seventh ground portion 311-1, the eighth ground portion 312-1, and the ninth ground portion 313-1 according to an embodiment are provided. FIG. 14A illustrates S11 graphs the second antenna including the second antenna element 220 depending on whether or not the seventh ground portion 311-1, the eighth ground portion 312-1, and the ninth ground portion 313-1 are grounded, and FIG. 14B illustrates S11 graphs the first antenna including the first antenna element 210 depending on whether or not the seventh ground portion 311-1, the eighth ground portion 312-1, and the ninth ground portion 313-1 are provided.

Referring to FIG. 14, when the first housing 110 and the second housing 120 face each other, compared to the case where the seventh ground portion 311-1, the eighth ground portion 312-1, and the ninth ground portion 313-1 of the metallic member 310 are not grounded, parasitic resonances may be removed when the seventh ground portion 311-1, the eighth ground portion 312-1, and the ninth ground portion 313-1 of the metallic member 310 are grounded.

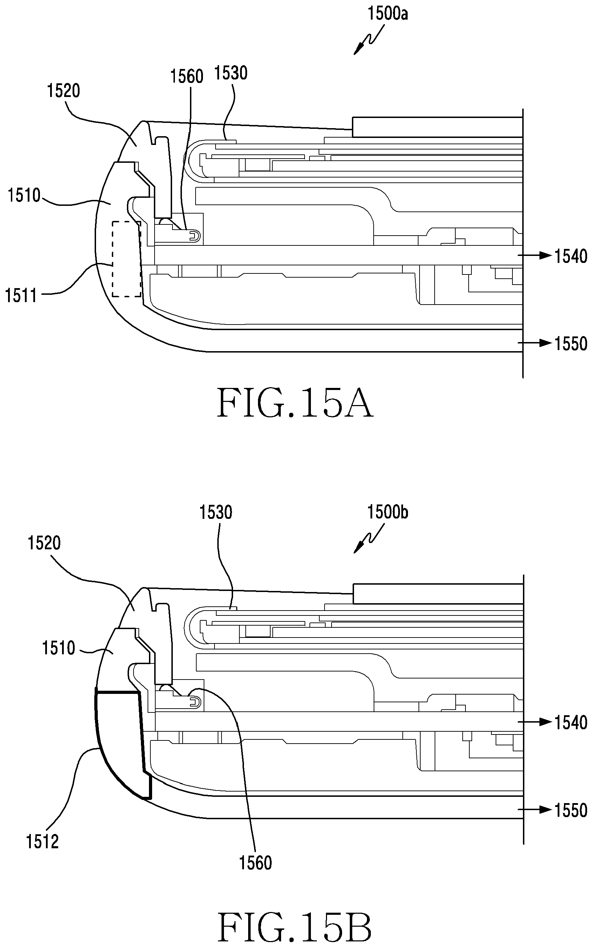

FIG. 15 illustrates electronic devices 1500a and 1500b which include antenna radiators 1511 and 1512 provided in different ways and a metallic member 1520 according to an embodiment.

Referring to FIG. 15, the electronic device 1500a and the electronic device 1500b may each include a side surface member 1510, a metallic member 1520, a display 1530, a printed circuit board 1540, a rear surface cover 1550, and/or a conductive connecting member 1560. However, the components included in the electronic device 1500a and the electronic device 1500b are not limited to the above-mentioned components and may further include other components in addition to the above-mentioned components. For example, the electronic device 1500a and the electronic device 1500b may further include at least one sensor or a battery.

According to an embodiment, the side surface member 1510 of the electronic device 1500a may be made of a non-conductive member. In this case, the antenna radiator 1511 may be located in at least one region of the side surface member 1510 or a position adjacent to the side surface member 1510. For example, the antenna radiator 1511 may be provided in one region of the side surface member 1510 in an in-mold form or may be disposed in a flexible printed circuit board (FPCB) form.

According to an embodiment, the side surface member of the electronic device 1500b may include a non-metallic member 1510 (e.g., the non-metallic member 320 of FIG. 3) and a conductive member 1512. In an embodiment, at least a portion of the conductive member 1512 (e.g., the first antenna element 210 and/or the second antenna element 220 of FIG. 2) may operate as an antenna radiator.

According to an embodiment, the display 1530 may define at least a portion of the front surface of the electronic device 1500a and/or the electronic device 1500b. For example, the display 1530 may be provided to fill one surface of the electronic device 1500a and/or the electronic device 1500b while being located on a surface opposite to the surface on which the rear surface cover 1550 of the electronic device 1500a and/or the electronic device 1500b is located.

According to an embodiment, the metallic member 1520 (e.g., the metallic member 310 of FIG. 3) may be disposed along an edge of the display 1530 adjacent to or in contact with the non-metallic member 1510. In an example, a ground portion (not illustrated) (e.g., the first ground portion 311 of FIG. 4) may be provided in at least a portion of the metallic member 1520.

According to an embodiment, the ground portion (not illustrated) provided in at least a portion of the metallic member 1520 may be electrically connected to a ground region provided in a printed circuit board via a conductive connecting member 1560 (e.g., the conductive connecting member 370 of FIG. 3). In an example, the ground portion (not illustrated) provided in at least a portion of the metallic member 1520 may be electrically connected to the ground region, thereby grounding at least one region of the metallic member 1520.

According to an embodiment, the rear surface cover 1550 may define the rear surface of the electronic device 1500a and/or the electronic device 1500b to protect the electronic device 1500a and/or the electronic device 1500b from an external impact.

According to an embodiment, the electronic device 1500a and/or the electronic device 1500b may be a foldable electronic device. In an example, the electronic device 1500a and/or the electronic device 1500b may include a hinge structure, and the display 1530 may include a flexible display. According to another embodiment, the electronic device 1500a and/or the electronic device 1500b may be a bar-type electronic device. In an example, the electronic device 1500a and/or the electronic device 1500b may not include a hinge structure. In addition, the electronic device 1500a and/or the electronic device 1500b may include all types of electronic devices including a metallic member 1520 and a side surface member 1510, wherein a ground portion provided in at least a portion of the metallic member 1520 is electrically connected to a ground region provided in a printed circuit board 1540 via a conductive connecting member 1560.

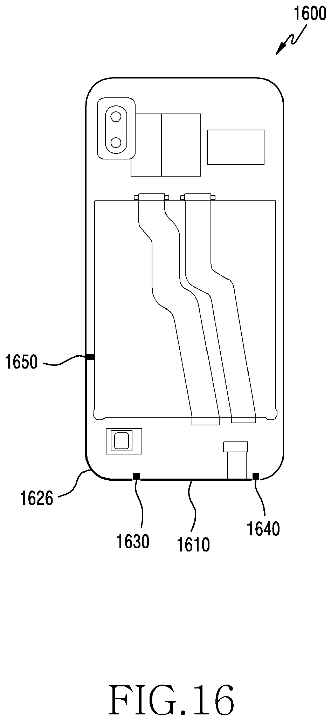

FIG. 16 illustrates a first antenna radiator 1610 and a second antenna radiator 1620 in an electronic device 1600 according to an embodiment.

Referring to FIG. 16, the electronic device 1600 may include the first antenna radiator 1610, the second antenna radiator 1620, a first ground portion 1630, a second ground portion 1640, or a third ground portion 1650.

According to an embodiment, it may be understood that the first antenna radiator 1610 (e.g., the first antenna element 210 of FIG. 2), the second antenna radiator 1620 (e.g., the second antenna element 220 of FIG. 2), the first ground portion 1630, the second ground portion 1640, or the third ground portion 1650 illustrated in FIG. 16 may have substantially the same configurations as those of the first antenna element 210, the second antenna element 220, the first ground portion 311, the second ground portion 312, and the third ground portion 313 illustrated in FIG. 8, respectively. In an example, the first antenna radiator 1610 and the second antenna radiator 1620 may resonate in different frequency bands. In another example, the first ground portion 1630, the second ground portion 1640, and the third ground portion 1650 may electrically connected to a ground region provided in a printed circuit board (not illustrated) included in the electronic device 1600. In another example, the third ground portion 1650 may be electrically connected to the ground region via a switch circuit 1000 like the third ground portion 313 illustrated in FIG. 10. In another example, by the first ground portion 1630, the second ground portion 1640, and the third ground portion 1650 included in the electronic device 1600, parasitic resonances may be removed from resonances formed by the first antenna radiator 1610 and/or the second antenna radiator 1620.

**[Table 2]**

| Total radiated power | Low frequency | | | Middle frequency | | | High frequency | | |
|---|---|---|---|---|---|---|---|---|---|
| | Low | Mid | High | Low | Mid | High | Low | Mid | High |
| Default | 17 | 18 | 17.7 | 17.8 | 17.3 | 18.5 | 19.5 | 18.4 | 17.6 |
| Metallic material | 16.5 | 17.3 | 17 | 14.2 | 16 | 15.7 | 17.2 | 17.5 | 16.9 |
| Grounding of the first ground portion and the second ground portion | 17 | 17.5 | 17.2 | 15.8 | 17 | 17.8 | 19 | 18.6 | 17.6 |
| Grounding of the first ground portion and the second ground portion | 16.5 | 17.3 | 16.1 | 18 | 17.5 | 18 | 17.5 | 18 | 17.3 |

Table 2 illustrates a change in antenna radiation performance in a frequency band depending on whether or not ground portions are provided in the electronic device 1600. Referring to Table 2, when the first ground portion 1630 and the second ground portion 1640 are provided in the electronic device 1600, antenna radiation performance can be improved in the low-frequency band and the high-frequency band, and when the first ground portion 1630 and the third ground portion 1650 are provided in the electronic device, antenna radiation performance can be improved in the middle-frequency band.

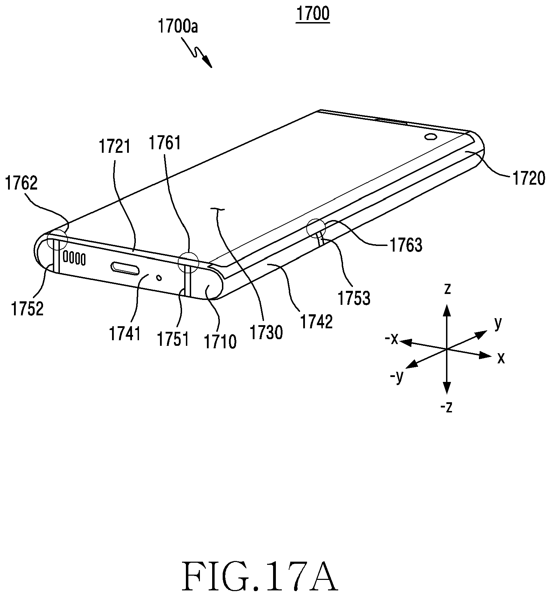

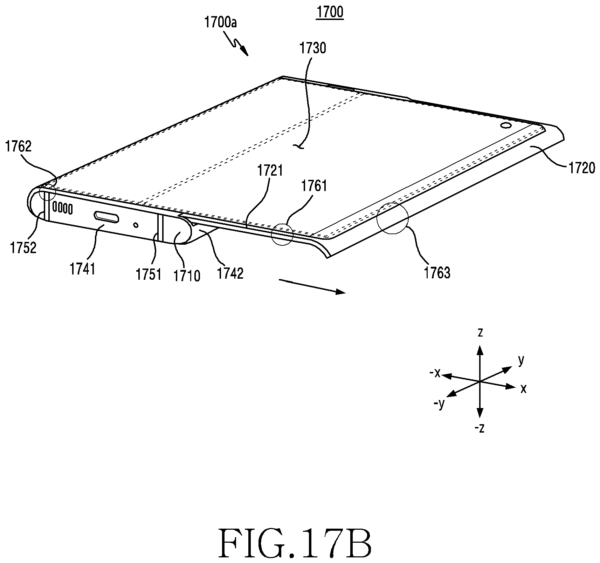

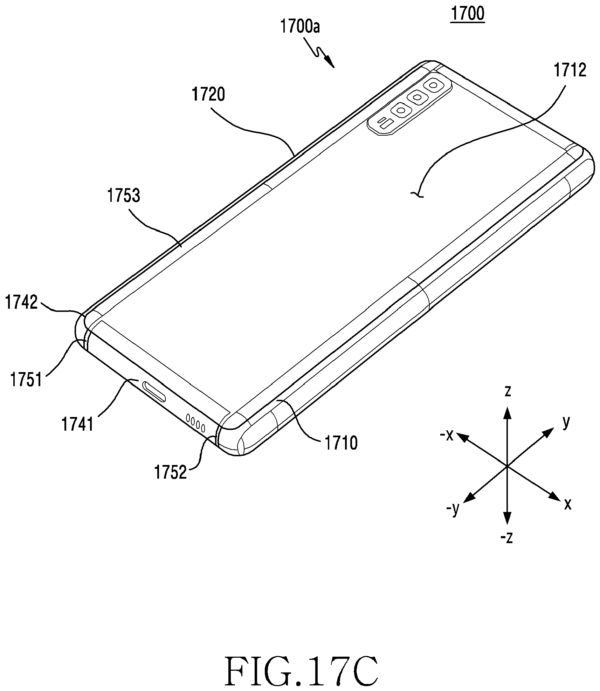

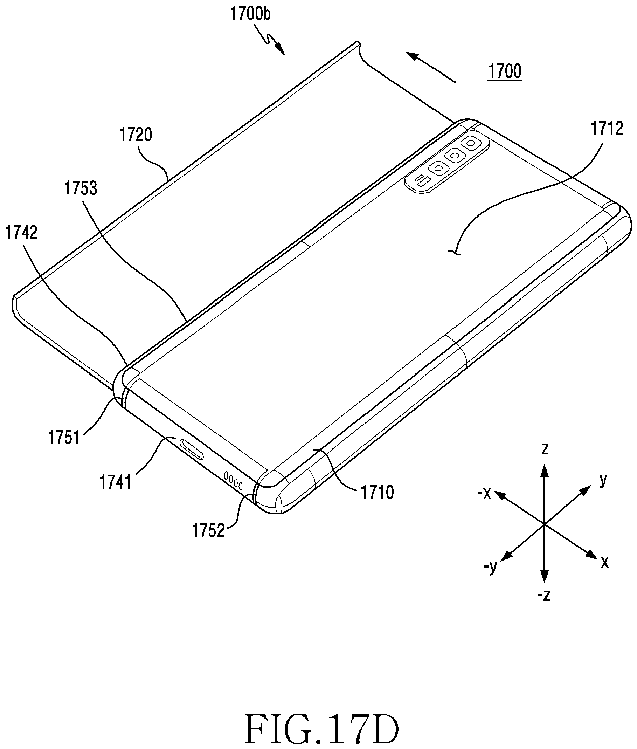

FIG. 17A is a front perspective view of an electronic device 1700 according to an embodiment in a first state 1700a. FIG. 17B is a front perspective view of an electronic device 1700 according to an embodiment in a second state 1700b. FIG. 17C is a front perspective view of an electronic device 1700 according to an embodiment in the first state 1700a. FIG. 17D is a front perspective view of an electronic device 1700 according to an embodiment in the second state 1700b.

Referring to FIGS. 17A, 17B, 17C, and 17D, the electronic device 1700 may include a first housing 1710, a second housing 1720, and a flexible display 1730 disposed over the first housing 1710 and the second housing 1720. The first housing 1710 may include a first antenna element 1741, a second antenna element 1742, a first insulating member 1751, a second insulating member 1752, or a third insulating member 1753. The second housing 1720 may include a first ground portion 1761, a second ground portion 1762, or a third ground portion 1763.

According to an embodiment, the first housing 1710 and the second housing 1720 may define a partial region of a front surface of the electronic device 1700 (e.g., the surface located in the +z-axis direction of the electronic device 1700 in FIG. 17A), a rear surface (e.g., the surface located in the -z axis direction of the electronic device 1700 in FIG. 17A), and a side surface (e.g., the surface interconnecting the front and rear surfaces of the electronic device 1700).

According to an embodiment, a rear plate 1712 may be disposed on the rear surface of the electronic device 1700 (e.g., the surface located in the -z axis direction of the electronic device 1700 in FIG. 17A).

According to an embodiment, the flexible display 1730 may include at least a portion of a flat shape or at least a portion of a curved shape.

According to an embodiment, it may be understood that when the electronic device 1700 is in the first state 1700a, the first housing 1710 and the second housing 1720 are in an overlapping state, and it may be understood that when the electronic device 1700 is in the second state 1700b, the second housing 1720 moves by a predetermined distance relative to the first housing 1710. For example, the first state 1700a and the second state 1700b of the electronic device 100 may be determined depending on the moving distance of the second housing 1720 relative to the first housing 1710, and the electronic device 100 may be configured to be transformed between the first state 1700a and the second state 1700b by a user's manipulation or mechanical operation.

According to an embodiment, when the electronic device 1700 is switched from the first state 1700a to the second state 1700b according to the movement of the second housing 1720, at least a portion of the flexible display 1730 may be slid out from inside to outside of the device 1700 (or exposed). In various embodiments, when the flexible display 1730 is slid out (or exposed), it may mean that the flexible display is viewed from outside the electronic device 1700. In another embodiment, when the electronic device 1700 is switched from the second state 1700b to the first state 1700a according to the movement of the second housing 1720, at least a portion of the flexible display 1730 may be slid into the electronic device 1700. In various embodiments, when the flexible display 1730 is slid into the electronic device 1700, it may mean that the flexible display is not viewed from outside of the electronic device 1700.

According to an embodiment, a side surface member 1711 that defines the side surface of the first housing 1710 (e.g., the surface of the first housing 1710 forming a predetermined angle with the xy plane of FIG. 17) may include a first antenna element 1741 or a second antenna element 1742. In an example, a first insulating member 1751 and a second insulating member 1752 may be located at opposite ends of the first antenna element 1741, and the first insulating member 1751 and a third insulating member 1753 may be located at opposite ends of the second antenna element 1742.

According to an embodiment, a metallic member 1721 may be provided in at least a portion of the second housing 1720. For example, the metallic member 1721 made of a conductive material may be disposed along an edge of the flexible display 1730 in one region of the second housing 1720.

According to an embodiment, a first ground portion 1761 may be provided at a position of the metallic member 1721 spaced apart by a predetermined distance from the first insulating member 1751 provided in one region of the side surface member 1710. According to another embodiment, a second ground portion 1762 may be provided at a position of the metallic member 1721 spaced apart by a predetermined distance from the second insulating member 1752 provided in one region of the side surface member 1710. According to another embodiment, a third ground portion 1763 may be provided at a position of the metallic member 1722 spaced apart by a predetermined distance from the third insulating member 1753 provided in one region of the side surface member 1710. However, insulating members and ground portions may be provided in the first housing 1710 in a form different from those described above. For example, the second insulating member 1752 and the third insulating member 1753 are provided in the first housing 1710, and the second ground portion 1762 and the third ground portion 1763 may be provided at positions spaced apart from respective insulating members by predetermined distances, respectively.

According to an embodiment, it may be understood that configurations illustrated in FIG. 17A, FIG. 17B, FIG. 17C and FIG. 17D are substantially the same as those illustrated in FIG. 2 or FIG. 8. For example, the first antenna element 1741 and the second antenna element 1742 may be understood as having substantially the same configurations as the first antenna element 210 and the second antenna element 220 of FIG. 2. As another example, the first insulating member 1751, the second insulating member 1752, and the third insulating member 1753 may be understood as having substantially the same configurations as the first insulating member 230, the second insulating member 240, and the third insulating member 250. As another example, the first ground portion 1761, the second ground portion 1762, and the third ground portion 1763 may be understood as having substantially the same configurations as the first ground portion 311, the second ground portion 312, and the third ground portion 313 of FIG. 8. In an example, the configurations of FIGS. 17A to 17D, which may be understood as having the same configurations as those of FIG. 2 or FIG 8, may be understood as having substantially the same effects as those of the configurations of FIG. 2 or FIG. 8. For example, by providing the first ground portion 1761, the second ground portion 1762, and the third ground portion 1763 to be spaced apart from the first insulating member 1751, the second insulating member 1752, and the third insulating member 1753 by predetermined distances, respectively, parasitic resonances may be removed in multiple frequency bands when radiation is performed via the first antenna element 1741 and the second antenna element 1742.

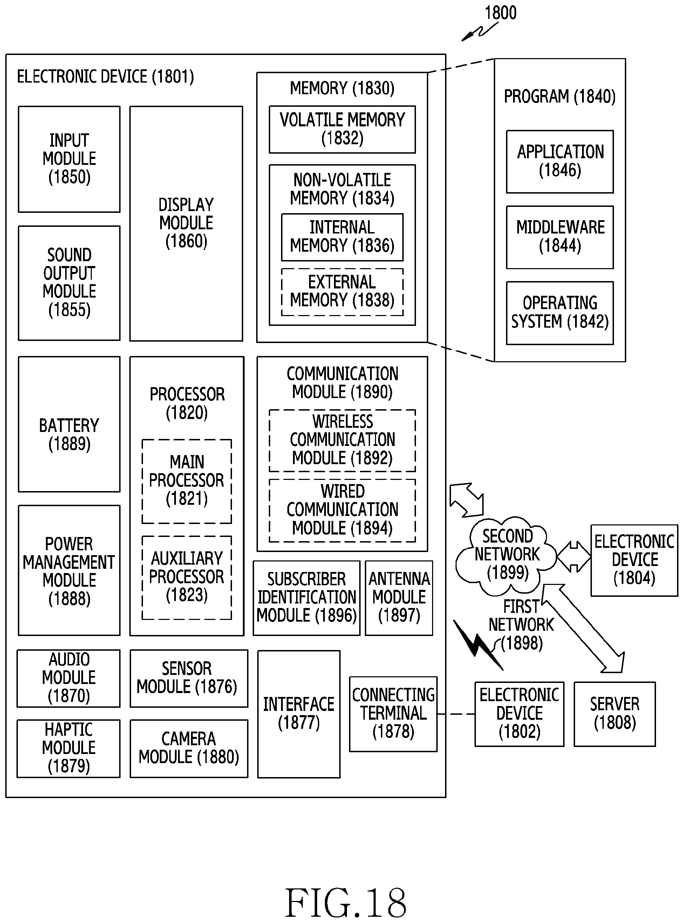

Fig. 18 is a block diagram illustrating an electronic device 1801 in a network environment 1800 according to various embodiments.

Referring to Fig. 18, the electronic device 1801 in the network environment 1800 may communicate with an electronic device 1802 via a first network 1898 (e.g., a short-range wireless communication network), or at least one of an electronic device 1804 or a server 1808 via a second network 1899 (e.g., a long-range wireless communication network). According to an embodiment, the electronic device 1801 may communicate with the electronic device 1804 via the server 1808. According to an embodiment, the electronic device 1801 may include a processor 1820, memory 1830, an input module 1850, a sound output module 1855, a display module 1860, an audio module 1870, a sensor module 1876, an interface 1877, a connecting terminal 1878, a haptic module 1879, a camera module 1880, a power management module 1888, a battery 1889, a communication module 1890, a subscriber identification module(SIM) 1896, or an antenna module 1897. In some embodiments, at least one of the components (e.g., the connecting terminal 1878) may be omitted from the electronic device 1801, or one or more other components may be added in the electronic device 1801. In some embodiments, some of the components (e.g., the sensor module 1876, the camera module 1880, or the antenna module 1897) may be implemented as a single component (e.g., the display module 1860).

The processor 1820 may execute, for example, software (e.g., a program 1840) to control at least one other component (e.g., a hardware or software component) of the electronic device 1801 coupled with the processor 1820, and may perform various data processing or computation. According to one embodiment, as at least part of the data processing or computation, the processor 1820 may store a command or data received from another component (e.g., the sensor module 1876 or the communication module 1890) in volatile memory 1832, process the command or the data stored in the volatile memory 1832, and store resulting data in non-volatile memory 1834. According to an embodiment, the processor 1820 may include a main processor 1821 (e.g., a central processing unit (CPU) or an application processor (AP)), or an auxiliary processor 1823 (e.g., a graphics processing unit (GPU), a neural processing unit (NPU), an image signal processor (ISP), a sensor hub processor, or a communication processor (CP)) that is operable independently from, or in conjunction with, the main processor 1821. For example, when the electronic device 1801 includes the main processor 1821 and the auxiliary processor 1823, the auxiliary processor 1823 may be adapted to consume less power than the main processor 1821, or to be specific to a specified function. The auxiliary processor 1823 may be implemented as separate from, or as part of the main processor 1821.

The auxiliary processor 1823 may control at least some of functions or states related to at least one component (e.g., the display module 1860, the sensor module 1876, or the communication module 1890) among the components of the electronic device 1801, instead of the main processor 1821 while the main processor 1821 is in an inactive (e.g., sleep) state, or together with the main processor 1821 while the main processor 1821 is in an active state (e.g., executing an application). According to an embodiment, the auxiliary processor 1823 (e.g., an image signal processor or a communication processor) may be implemented as part of another component (e.g., the camera module 1880 or the communication module 1890) functionally related to the auxiliary processor 1823. According to an embodiment, the auxiliary processor 1823 (e.g., the neural processing unit) may include a hardware structure specified for artificial intelligence model processing. An artificial intelligence model may be generated by machine learning. Such learning may be performed, e.g., by the electronic device 1801 where the artificial intelligence is performed or via a separate server (e.g., the server 1808). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 1830 may store various data used by at least one component (e.g., the processor 1820 or the sensor module 1876) of the electronic device 1801. The various data may include, for example, software (e.g., the program 1840) and input data or output data for a command related thererto. The memory 1830 may include the volatile memory 1832 or the non-volatile memory 1834.

The program 1840 may be stored in the memory 1830 as software, and may include, for example, an operating system (OS) 1842, middleware 1844, or an application 1846.

The input module 1850 may receive a command or data to be used by another component (e.g., the processor 1820) of the electronic device 1801, from the outside (e.g., a user) of the electronic device 1801. The input module 1850 may include, for example, a microphone, a mouse, a keyboard, a key (e.g., a button), or a digital pen (e.g., a stylus pen).

The sound output module 1855 may output sound signals to the outside of the electronic device 1801. The sound output module 1855 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 1860 may visually provide information to the outside (e.g., a user) of the electronic device 1801. The display module 1860 may include, for example, a display, a hologram device, or a projector and control circuitry to control a corresponding one of the display, hologram device, and projector. According to an embodiment, the display module 1860 may include a touch sensor adapted to detect a touch, or a pressure sensor adapted to measure the intensity of force incurred by the touch.

The audio module 1870 may convert a sound into an electrical signal and vice versa. According to an embodiment, the audio module 1870 may obtain the sound via the input module 1850, or output the sound via the sound output module 1855 or a headphone of an external electronic device (e.g., an electronic device 1802) directly (e.g., wired) or wirelessly coupled with the electronic device 1801.

The sensor module 1876 may detect an operational state (e.g., power or temperature) of the electronic device 1801 or an environmental state (e.g., a state of a user) external to the electronic device 1801, and then generate an electrical signal or data value corresponding to the detected state. According to an embodiment, the sensor module 1876 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 1877 may support one or more specified protocols to be used for the electronic device 1801 to be coupled with the external electronic device (e.g., the electronic device 1802) directly (e.g., wired) or wirelessly. According to an embodiment, the interface 1877 may include, for example, a high definition multimedia interface (HDMI), a universal serial bus (USB) interface, a secure digital (SD) card interface, or an audio interface.

A connecting terminal 1878 may include a connector via which the electronic device 1801 may be physically connected with the external electronic device (e.g., the electronic device 1802). According to an embodiment, the connecting terminal 1878 may include, for example, a HDMI connector, a USB connector, a SD card connector, or an audio connector (e.g., a headphone connector).

The haptic module 1879 may convert an electrical signal into a mechanical stimulus (e.g., a vibration or a movement) or electrical stimulus which may be recognized by a user via his tactile sensation or kinesthetic sensation. According to an embodiment, the haptic module 1879 may include, for example, a motor, a piezoelectric element, or an electric stimulator.

The camera module 1880 may capture a still image or moving images. According to an embodiment, the camera module 1880 may include one or more lenses, image sensors, image signal processors, or flashes.

The power management module 1888 may manage power supplied to the electronic device 1801. According to one embodiment, the power management module 1888 may be implemented as at least part of, for example, a power management integrated circuit (PMIC).

The battery 1889 may supply power to at least one component of the electronic device 1801. According to an embodiment, the battery 1889 may include, for example, a primary cell which is not rechargeable, a secondary cell which is rechargeable, or a fuel cell.

The communication module 1890 may support establishing a direct (e.g., wired) communication channel or a wireless communication channel between the electronic device 1801 and the external electronic device (e.g., the electronic device 1802, the electronic device 1804, or the server 1808) and performing communication via the established communication channel. The communication module 1890 may include one or more communication processors that are operable independently from the processor 1820 (e.g., the application processor (AP)) and supports a direct (e.g., wired) communication or a wireless communication. According to an embodiment, the communication module 1890 may include a wireless communication module 1892 (e.g., a cellular communication module, a short-range wireless communication module, or a global navigation satellite system (GNSS) communication module) or a wired communication module 1894 (e.g., a local region network (LAN) communication module or a power line communication (PLC) module). A corresponding one of these communication modules may communicate with the external electronic device via the first network 1898 (e.g., a short-range communication network, such as BluetoothTM, wireless-fidelity (Wi-Fi) direct, or infrared data association (IrDA)) or the second network 1899 (e.g., a long-range communication network, such as a legacy cellular network, a 5G network, a next-generation communication network, the Internet, or a computer network (e.g., LAN or wide region network (WAN)). These various types of communication modules may be implemented as a single component (e.g., a single chip), or may be implemented as multi components (e.g., multi chips) separate from each other. The wireless communication module 1892 may identify and authenticate the electronic device 1801 in a communication network, such as the first network 1898 or the second network 1899, using subscriber information (e.g., international mobile subscriber identity (IMSI)) stored in the subscriber identification module 1896.

The wireless communication module 1892 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 1892 may support a high-frequency band (e.g., the mmWave band) to achieve, e.g., a high data transmission rate. The wireless communication module 1892 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 1892 may support various requirements specified in the electronic device 1801, an external electronic device (e.g., the electronic device 1804), or a network system (e.g., the second network 1899). According to an embodiment, the wireless communication module 1892 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (LTL), or a round trip of 1ms or less) for implementing URLLC.

The antenna module 1897 may transmit or receive a signal or power to or from the outside (e.g., the external electronic device) of the electronic device 1801. According to an embodiment, the antenna module 1897 may include an antenna including a radiating element composed of a conductive material or a conductive pattern formed in or on a substrate (e.g., a printed circuit board (PCB)). According to an embodiment, the antenna module 1897 may include a plurality of antennas (e.g., array antennas). In such a case, at least one antenna appropriate for a communication scheme used in the communication network, such as the first network 1898 or the second network 1899, may be selected, for example, by the communication module 1890 (e.g., the wireless communication module 1892) from the plurality of antennas. The signal or the power may then be transmitted or received between the communication module 1890 and the external electronic device via the selected at least one antenna. According to an embodiment, another component (e.g., a radio frequency integrated circuit (RFIC)) other than the radiating element may be additionally formed as part of the antenna module 1897.

According to various embodiments, the antenna module 1897 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be mutually coupled and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 1801 and the external electronic device 1804 via the server 1808 coupled with the second network 1899. Each of the electronic devices 1802 or 1804 may be a device of a same type as, or a different type, from the electronic device 1801. According to an embodiment, all or some of operations to be executed at the electronic device 1801 may be executed at one or more of the external electronic devices 1802, 1804, or 1808. For example, if the electronic device 1801 should perform a function or a service automatically, or in response to a request from a user or another device, the electronic device 1801, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 1801. The electronic device 1801 may provide the outcome, with or without further processing of the outcome, as at least part of a reply to the request. To that end, a cloud computing, distributed computing, mobile edge computing (MEC), or client-server computing technology may be used, for example. The electronic device 1801 may provide ultra low-latency services using, e.g., distributed computing or mobile edge computing. In another embodiment, the external electronic device 1804 may include an internet-of-things (IoT) device. The server 1808 may be an intelligent server using machine learning and/or a neural network. According to an embodiment, the external electronic device 1804 or the server 1808 may be included in the second network 1899. The electronic device 1801 may be applied to intelligent services (e.g., smart home, smart city, smart car, or healthcare) based on 5G communication technology or IoT-related technology.

According to various embodiments, an electronic device may include a first housing, a second housing connected to the first housing via a connecting member to be rotatable relative to the first housing, a flexible display defining a front surface of the electronic device and disposed over the first housing and the second housing, a metal frame defining a portion of a side surface of the electronic device, a non-metallic member defining another portion of the side surface of the electronic device while being in contact with the metal frame, a metallic member disposed along an edge of the flexible display on the non-metallic member, a printed circuit board disposed in an inner space of the electronic device defined by the metal frame, the printed circuit board including a ground region, and a wireless communication circuit disposed in the space defined by the metal frame. The metal frame may include a first antenna element defined by a first insulating member and a second insulating member, and a second antenna element defined by the first insulating member and a third insulating member, the wireless communication circuit may be configured to feed power to the first antenna element and the second antenna element, the metallic member may be connected to the ground region at positions that correspond to the first insulating member and the second insulating member, respectively, and the metallic member may be connected to the ground region via a switch at a position that corresponds to the third insulating member.

According to an embodiment, the switch may include a filter or a diplexer.

According to an embodiment, the non-metallic member may be made of a material having a predetermined permittivity.

According to an embodiment, the conductive connecting member may be a C-clip.

According to an embodiment, a resonance formed in the first antenna element may be formed in a frequency band higher than a resonance frequency band of the second antenna element.

According to an embodiment, when the switch is turned ON, antenna radiation performance via the second antenna element is improved in a predetermined frequency band, and when the switch is turned OFF, the antenna radiation performance via the second antenna element may be improved in a frequency band lower than the predetermined frequency band.

According to an embodiment, when the first housing and the second housing face each other, the second housing may include insulating members at positions that correspond to the first insulating member, the second insulating member, and the third insulating member, respectively, and antenna elements at positions that correspond to the first antenna element and the second element, respectively, the wireless communication circuit may be configured to feed power to the fourth antenna element, and the metallic member may be connected to the ground region at positions that correspond to the insulating members, respectively.

According to an embodiment, the wireless communication circuit may be configured to receive a signal in an 800 MHz or 1.8 GHz frequency band by feeding power to the first antenna element.

According to an embodiment, the wireless communication circuit may be configured to receive a signal in a 2.6 GHz frequency band by feeding power to the second antenna element.

According to an embodiment, the metal frame may further include a third antenna element defined by a fourth insulating member and a fifth insulating member, the wireless communication circuit may be configured to feed power to the third antenna element, and the metallic member may be connected to the ground region at positions that correspond to the fourth insulating member and the fifth insulating member, respectively.

According to an embodiment, the switch may be a first switch, the metal frame further includes a fourth antenna element defined by the fourth insulating member and the sixth insulating member, the wireless communication circuit may be configured to feed power to the fourth antenna element, and the metallic member may be connected to the ground region via a second switch at a position that corresponds to the sixth insulating member.

According to an embodiment, a resonance formed in the third antenna element may be formed in a frequency band higher than a resonance frequency band of the fourth antenna element.

According to an embodiment, the wireless communication circuit may be configured to receive a signal in an 800 MHz frequency band by feeding power to the third antenna element.

According to an embodiment, the wireless communication circuit may be configured to receive a signal in a 1.8 GHz or 2.6 GHz frequency band by feeding power to the fourth antenna element.

According to various embodiments, an electronic device may include a display defining a front surface of the electronic device, a metal frame defining a portion of a side surface of the electronic device, a non-metallic member defining another portion of the side surface of the electronic device while being in contact with the metal frame, a metallic member arranged on the non-metallic member along an edge of the front surface of the electronic device, a printed circuit board disposed in a space defined by the metal frame and including a ground region, and a wireless communication circuit disposed in the space defined by the metal frame. The metal frame may include a first antenna element defined by a first insulating member and a second insulating member, and a second antenna element defined by the first insulating member and a third insulating member, the wireless communication circuit may be configured to feed power to the first antenna element and the second antenna element, the metallic member may be connected to the ground region at positions corresponding to the first insulating member and the second insulating member, and the metallic member may be connected to the ground region via a switch at a position that corresponds to the third insulating member.

According to an embodiment, the switch may include a filter or a diplexer.

According to an embodiment, the metal frame may further include a third antenna element defined by a fourth insulating member and a fifth insulating member, the wireless communication circuit may be configured to feed power to the third antenna element, and the metallic member may be connected to the ground region at positions corresponding to the fourth insulating member and the fifth insulating member.

According to an embodiment, the switch may be a first switch, the metal frame further includes a fourth antenna element defined by the fourth insulating member and the sixth insulating member, the wireless communication circuit may be configured to feed power to the fourth antenna element, and the metallic member may be connected to the ground region via a second switch at a position corresponding to the sixth insulating member.

According to an embodiment, the first antenna element and the second antenna element may be at least portions of the metal frame or may be fabricated by injection onto the non-metallic member.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with", "coupled to", "connected with", or "connected to" another element (e.g., a second element), it means that the element may be coupled with the other element directly (e.g., wired), wirelessly, or via a third element.

As used in connection with various embodiments of the disclosure, the term "module" may include a unit implemented in hardware, software, or firmware, and may interchangeably be used with other terms, for example, "logic", "logic block", "part", or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 1840) including one or more instructions that are stored in a storage medium (e.g., internal memory 1836 or external memory 1838) that is readable by a machine (e.g., the electronic device 1801). For example, a processor (e.g., the processor 1820) of the machine (e.g., the electronic device 1801) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStoreTM), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device comprising:
a first housing;
a second housing connected to the first housing via a connecting member to be rotatable to the first housing;
a flexible display forming a front surface of the electronic device and disposed on the first housing and the second housing;
a metal frame forming a portion of a side surface of the electronic device, the metal frame comprising a first antenna element defined by a first insulating member and a second insulating member, and a second antenna element defined by the first insulating member and a third insulating member;
a non-metallic member forming another portion of the side surface of the electronic device while being in contact with the metal frame;
a metallic member disposed along an edge of the flexible display on the non-metallic member;
a printed circuit board disposed in an inner space of the electronic device formed by the metal frame, the printed circuit board comprising a ground region; and
a wireless communication circuit disposed in the inner space formed by the metal frame,
wherein the wireless communication circuit is configured to feed power to the first antenna element and the second antenna element,
wherein the metallic member is connected to the ground region at positions corresponding to the first insulating member and the second insulating member, and
wherein the metallic member is connected to the ground region via a switch at a position corresponding to the third insulating member.

2. The electronic device of claim 1, wherein the switch comprises a filter or a diplexer.

3. The electronic device of claim 1, wherein the non-metallic member is formed of a material having a predetermined permittivity.

4. The electronic device of claim 1, wherein the metallic member is electrically connected to the ground region by a conductive connecting member.

5. The electronic device of claim 4, wherein the conductive connecting member is a C-clip.

6. The electronic device of claim 1, wherein a resonance formed in the first antenna element is formed in a frequency band higher than a resonance frequency band of the second antenna element.

7. The electronic device of claim 1, wherein the wireless communications circuit is configured to:
short the switch in case of transmitting and/or receiving a signal in a first frequency band;
open the switch in case of transmitting and/or receiving a signal of a second frequency band higher than the first frequency band.

8. The electronic device of claim 1, wherein, in case that the first housing and the second housing face each other, the second housing comprises:
a fourth insulating member, a fifth insulating member, and a sixth insulating member disposed at positions that correspond to the first insulating member, the second insulating member, and the third insulating member, respectively; and
a third antenna element and a fourth antenna element disposed at positions that correspond to the first antenna element and the second antenna element, respectively,
wherein the wireless communication circuit feeds power to the third antenna element and the fourth antenna element, and
wherein the metallic member is connected to the ground region at positions that correspond to the fourth insulating member, the fifth insulating member, and the sixth insulating member.

9. The electronic device of claim 1, wherein the wireless communication circuit is configured to receive a signal in an 800 MHz or 1.8 GHz frequency band by feeding power to the first antenna element.

10. The electronic device of claim 1, wherein the wireless communication circuit is configured to receive a signal in a 2.6 GHz frequency band by feeding power to the second antenna element.

11. The electronic device of claim 1, wherein the metal frame further comprises a third antenna element defined by a fourth insulating member and a fifth insulating member,
wherein the wireless communication circuit is configured to feed power to the third antenna element, and
wherein the metallic member is connected to the ground region at positions that correspond to the fourth insulating member and the fifth insulating member.

12. The electronic device of claim 11, wherein the switch is a first switch,
wherein the metal frame further comprises a fourth antenna element defined by the fourth insulating member and the sixth insulating member,
wherein the wireless communication circuit is configured to feed power to the fourth antenna element, and
wherein the metallic member is connected to the ground region via a second switch at a position that corresponds to the sixth insulating member.

13. The electronic device of claim 12, wherein a resonance formed in the third antenna element is formed in a frequency band higher than a resonance frequency band of the fourth antenna element.

14. The electronic device of claim 11, wherein the wireless communication circuit is configured to receive a signal in an 800 MHz frequency band by feeding power to the third antenna element.

15. The electronic device of claim 12, wherein the wireless communication circuit is configured to receive a signal in a 1.8 GHz or 2.6 GHz frequency band by feeding power to the fourth antenna element.
